# EUROPEAN PATENT SPECIFICATION

(11) **EP 2 837 745 B1**
(45) Date of publication and mention of the grant of the patent: **07.02.2018**
(21) Application number: 14177193.1
(22) Date of filing: 16.07.2014
(51) Int. Cl.: E03C 1/02, F16L 25/00

(54) **Termination box or a wall bend for connecting a conduit to a tap assembly**
Unterputz-Abschlusskasten oder -bogen zur Verbindung einer Rohrleitung mit einer Hahnanordnung
Boîtier de terminaison ou coude mural pour relier un conduit à un ensemble de robinet

(30) Priority: 19.07.2013 FI 20135788
(43) Date of publication of application: 18.02.2015
(73) Proprietor: Uponor Innovation AB, 73061 Virsbo (SE)
(72) Inventor: Laakso, Jyri, 01900 Nurmijärvi (FI)
(74) Representative: Papula Oy

(56) References cited:
- EP-A1- 0 538 197
- WO-A1-01/79738
- DE-A1- 3 504 127

## Description

### TECHNICAL FIELD

The invention relates to a termination box or wall bend for connecting a conduit to a tap assembly, said termination box or wall bend comprising a body inside of which a tap elbow or tap fitting is mountable, which conduit comprises an inner utility pipe and an outer protective pipe, the protective pipe being provided with circumferential grooves on the outer face of it, the conduit being connectable to the tap elbow or tap fitting with a fastening sleeve, and the tap assembly being connectable to the tap elbow through a bushing or corresponding tunnel, said tap elbow being locked in place by a lid.

### TECHNICAL BACKGROUND

Water conduits in buildings are quite commonly connected to tap assemblies mounted on a wall surface by tap elbows or tap fittings. When conduits are mounted inside the wall structure it is extremely important that the conduit is connected to the tap elbow or corresponding tap fitting and further to the tap assembly so that the connections are watertight to prevent water leakage and damages caused by such leakages. Therefore the tap elbow / tap fitting is placed in a termination box and the water conduit is placed in a protective pipe to form a double wall structure (so-called pipe-in-pipe structure). This kind of mounting construction is quite well protected against leakages but however it may also cause some problems.

EP 0 538 197 A1 discloses a device which can be used as connection between a flexible pipeline and a fitting.

Because different conduit sizes may be used in different installations termination boxes must be designed so that they are able to receive various size conduits. It is not practical to design a termination box just for one conduit size. Due to this current pipe-in-pipe termination box systems have several sealings for different size conduits. This causes confusion and extra work for installers because they must select a correct sealing for each case and ensure the correct positioning of the sealing. Several sealings create also extra costs in investments and they are very sensible for conduit designs and tolerances in mountings.
As mentioned above the tap elbow is placed inside the termination box. In some current termination box designs the tap elbow is locked in place in a closed position by a lid. The lid comprises normally a base part and a sealing part. The sealing part seals the base part against the body part of the termination box as well as against the tap elbow. Both the body part of the termination box and the base part of the lid are provided with threads. The lid is mounted in its place by turning it in the threads. First one of the threads is provided with a nodule and respectively a groove is formed in the other thread, so that said nodule fits in said groove locking the lid in its place. A disadvantage for this arrangement is that the nodule may be cut off, even when installed once. This may cause a risk of opening the thread over the years.

### SUMMARY

The objective of the present invention is to provide a novel and improved termination box or wall bend for connecting a conduit to a tap assembly. To this end the inventive termination box / wall bend is characterized in that the fastening sleeve is provided with a conduit locking mechanism formed of protrusions extending towards the inside of the fastening sleeve to grip to the grooves of the protective pipe, and a flexible sealing part arranged inside the fastening sleeve, which sealing part comprises a flexible conduit sealing resting, when the termination box or wall bend is in use and the protective pipe is received within the fastening sleeve, against the outer surface of the protective pipe for sealing the same and a sealing section for sealing the fastening sleeve to the body of the termination box or wall bend.
In one embodiment of the invention, the protrusions of the locking mechanism are flexible in the radial direction of the fastening sleeve to allow conduits of various sizes to be received in the fastening sleeve and stiff in the axial direction of the fastening sleeve to prevent the conduit to be pulled out of the fastening sleeve when the protrusions are gripped to the grooves of the protective pipe. Also the flexible conduit sealing is arranged to receive and seal conduits of various sizes.
In a further embodiment of the invention, the flexible sealing part further comprises a spring element extending between the protrusions of the locking mechanism and the inner side of the fastening sleeve for supporting flexibly the locking mechanism.

The locking mechanism can be formed as an integral part of the fastening sleeve or as a separate piece mounted in the fastening sleeve.

According to one aspect of the invention the lid locking the tap elbow or tap fitting in place in the body of the termination box or wall bend is provided with a bayonet connection arrangement comprising thread-like bayonet elements arranged on the outer circumferential face of the lid, each of which elements are provided with a notch, and in an inner circumferential face of an opening in the body of the termination box or wall bend counter elements for the bayonet elements are arranged to guide the lid in its place when the lid is turned either clockwise or counter clockwise.

Between the body of the termination box or wall bend and the back side of the lid a sealing element made of compressible material can be arranged to create a force pushing the lid outwards and keeping the counter elements of the body in the notches of the bayonet elements. Similar spring like effect can be arranged by other means as well, e.g. separate part or having it in the tunnel or body. Sealing element itself can be positioned also other locations as only in back side.

The present invention provides considerable advantages over the prior art. In the inventive sealing arrangement for connecting a conduit to the termination box or wall bend there is no need for different sealings for different size conduits, but the sealing included in the inventive arrangement fits for various conduit sizes. So the installation work is easier and simpler than before. The sealing arrangement resists effectively the force of pulling out the conduit because a separate mechanical locking system is integrated in the arrangement. In the inventive arrangement to lock the tap elbow or tap fitting in place in the termination box or wall bend a bayonet arrangement in the lid is used instead of the nodule and groove system of the prior art. This makes the installation simple and secured, which can also easily be reopened when needed.

Other advantages and characteristic features of the invention are set out below by detailed disclosure of the invention, wherein the invention is described with reference to the figures of the accompanying drawing, to the details of which the invention is not exclusively limited.

### BRIEF DESCRIPTION OF THE FIGURES

Fig. 1 shows a termination box partly in a cross-sectional view.
Figs. 2A and 2B show how conduits of different sizes can be connected to the termination box by the inventive sealing arrangement.
Fig. 3 shows a perspective view of the termination box.
Fig. 4 shows in a cross-sectional view an embodiment of the sealing arrangement with a separate conduit locking mechanism.

### DETAILED DESCRIPTION OF PREFERRED EMBODIMENTS

As already explained earlier the present invention is directed to handle and solve the problems relating to the sealing of the connection between a conduit and a termination box or a wall bend and to the fixing of a tap elbow or a tap fitting in said termination box.

The drawing shows a termination box, inside of which a tap elbow is mounted. However, it is to be understood that the invention relates also to a wall bend, where the conduit and/or media pipe is bend 90 deg and fixed to wall by wall bend supports and media pipe by straight connector, i.e. by a tap fitting. This applies to all termination box and tap fitting definitions.

In the drawing the termination box is generally denoted with the reference numeral 10. The termination box 10 is mounted inside a wall structure of a building (not shown) to connect a conduit 25 to a tap assembly (not shown) and it comprises a body 11 inside of which a tap elbow 12 is mounted. The conduit 25 is connected to the tap elbow 12 with a fastening sleeve 16, and the tap assembly will be connected to the tap elbow through a bushing 22 or corresponding tunnel. The bushing 22 or tunnel may be integral with the body 11, or as shown in the drawing, it may be a separate component provided with threads 23, with which it can be mounted in place and taken away if needed. When the bushing 22 or tunnel is a separate component it is preferable to use a sealing 24 between the bushing 22 or tunnel and the body 11 of the termination box 10.

As mentioned above, the conduit 25 is a pipe-in-pipe structure comprising an inner pipe 26a which is the utility pipe for liquid and an outer pipe 26b which is the protective pipe. The protective pipe 26b is provided with circumferential grooves 26c. The inner utility pipe 26a is connected in a normal way to the pipe joint part on the tap elbow 12 and the outer protective pipe 26b is tightened in its place with the fastening sleeve 16. The fastening sleeve 16 is provided with a conduit locking mechanism 17 formed of protrusions extending towards the inside of the fastening sleeve 16 so that said protrusions grip to the grooves 26c of the protective pipe 26b. The protrusions are so flexible that they allow the conduit 25 to be pushed through the fastening sleeve 16 in one direction towards the tap elbow 12. On the other hand they are so stiff that when gripped to the grooves 26c they prevent the conduit 25 to be pulled out of the fastening sleeve 16 in the opposite direction. The fastening sleeve 16 is turned in its place by threads 16a arranged both on the body 11 and the fastening sleeve 16.

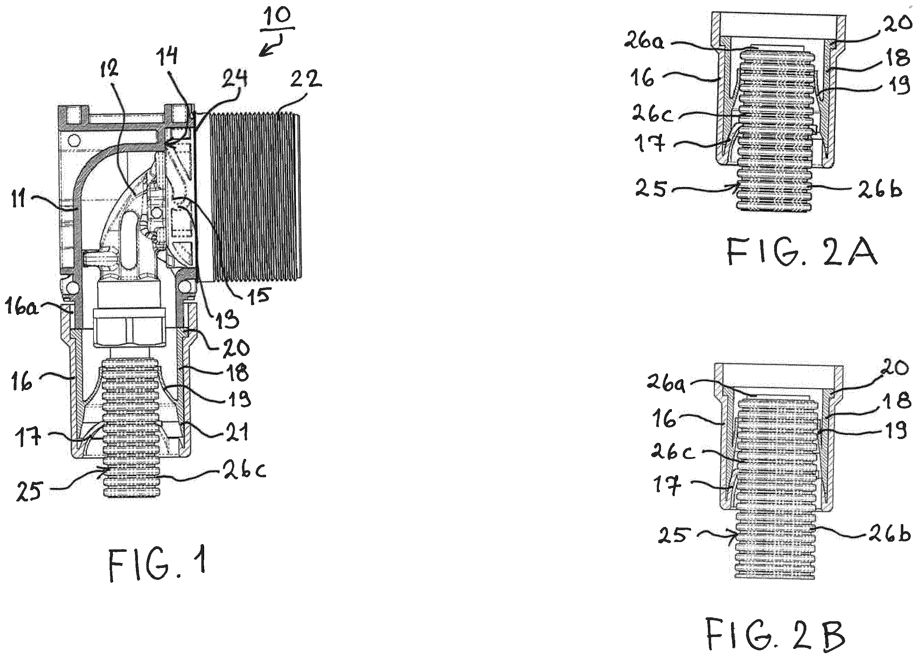

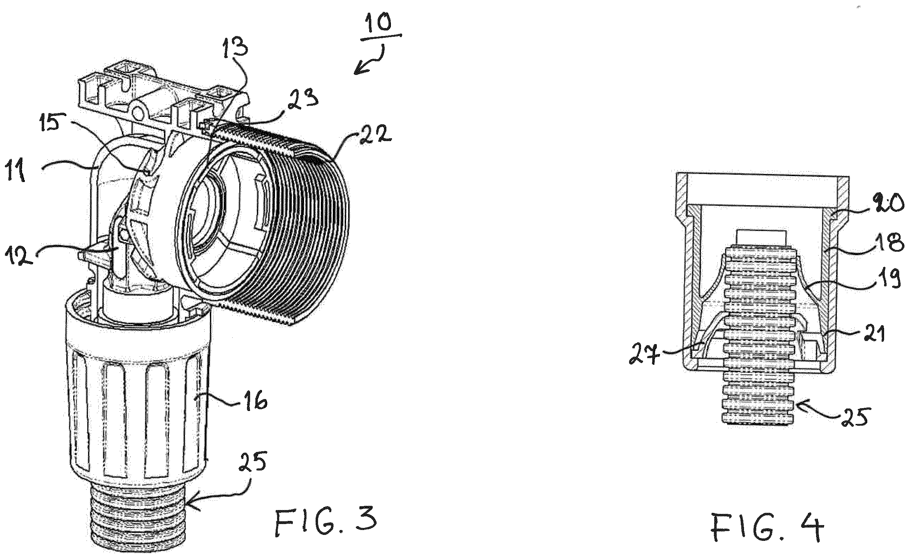

Inside the fastening sleeve 16 a flexible sealing part 18 is arranged, which sealing part 18 comprises a flexible conduit sealing 19 through which the protective pipe 26b is pushed. The conduit sealing 19 rests against the outer surface of the protective pipe 26b. The sealing part 18 further comprises a sealing section 20 for the body 11 of the termination box. When the fastening sleeve 16 is mounted in its place said sealing section 20 is squeezed against the body 11, whereby the fastening sleeve 16 also carries loads and the fastening sleeve 16 and the body 11 form a relatively rigid and integral piece. In order to make the conduit locking mechanism 17, i.e. the protrusions flexible enough for larger conduit dimensions, as seen in Fig. 2B, as well as stiff enough for smaller conduit dimensions, as seen in Fig. 2A, a spring element 21 is formed in the sealing part 18, which spring element 21 extends between the protrusions of the locking mechanism 17 and the inner side of the fastening sleeve 16. Said spring element 21 supports flexibly the locking mechanism 17. It is shown in the drawing that the locking mechanism 17 is an integral part of the fastening sleeve. However, as shown in Fig. 4, the locking mechanism 27 can be made as a separate piece mounted inside the fastening sleeve 16. In such case the sealing part 18 pushes the locking mechanism 27 in its place. An advantage of a separate locking mechanism is that it gives more flexibility to move the conduit 25 towards the body 11 of the termination box and away from it.

As shown in Figs. 1 and 3, in the invention the tap elbow 12 is locked in place in the body 11 of the termination box 10 with a lid 13 provided with a bayonet connection arrangement. On the outer circumferential face of the lid 13 thread-like bayonet elements are arranged, each of which elements are provided with a notch 15. In the inner circumferential face of the opening in the body 11 of the termination box 10 counter elements (not shown) for the bayonet elements are arranged guiding the lid 13 in its place when the lid 13 is turned clockwise. Said counter elements may simply be round dowels. When the turning movement of the lid 13 reaches the end the counter elements in the body 11 fall in the notches 15 of the bayonet elements. Between the body 11 of the termination box 10 and the back side of the lid 13 a sealing element 14 made of compressible material, e.g. rubber or corresponding, is arranged. Said sealing element 14 creates a force pushing the lid 13 outwards and thereby keeping the counter elements of the body in the notches 15 of the bayonet elements. The installation of the lid 13 is simple and secured, and the lid 13 can also easily be reopened when needed.

The invention has been described above by way of examples and with reference to the figures of the accompanying drawing. The invention is not limited merely to the examples illustrated in the figures; instead, different embodiments of the invention may vary within the scope of the inventive idea defined in the accompanying claims.

## Claims

1. A termination box or a wall bend for connecting a conduit (25) to a tap assembly, said termination box (10) or wall bend comprising a body (11) inside of which a tap elbow (12) or a tap fitting is mountable and a fastening sleeve (16), which conduit (25) comprises an inner utility pipe (26a) and an outer protective pipe (26b), the protective pipe (26b) being provided with circumferential grooves (26c) on the outer face of it, the conduit (25) being connected, when the termination box or a wall bend is in use, to the tap elbow (12) or tap fitting with the fastening sleeve (16), and the tap assembly being connected, when the termination box or a wall bend is in use, to the tap elbow (12) or tap fitting through a bushing (22) or corresponding tunnel, the fastening sleeve (16) being provided with a conduit locking mechanism (17, 27) formed of protrusions extending towards the inside of the fastening sleeve (16) to grip to the grooves (26c) of the protective pipe (26b), **characterized in that** the fastening sleeve (16) comprises a flexible sealing part (18) arranged inside the fastening sleeve (16), which sealing part (18) comprises a flexible conduit sealing (19) resting, when the termination box or a wall bend is in use, against the outer surface of the protective pipe (26b) for sealing the same and a sealing section (20) for sealing the fastening sleeve (16) to the body (11) of the termination box (10) or wall bend.

2. Termination box or wall bend as claimed in claim 1, **characterized in that** the termination box or wall bend comprises a lid (13) wherein, when the termination box or wall bend is in use, said tap elbow (12) or tap fitting is locked in place by the lid (13).

3. Termination box or wall bend as claimed in claim 1 or 2, **characterized in that** the protrusions of the locking mechanism (17, 27) are flexible in the radial direction of the fastening sleeve (16) to allow conduits (25) of various sizes to be received in the fastening sleeve (16) and stiff in the axial direction of the fastening sleeve (16) to prevent the conduit (25) to be pulled out of the fastening sleeve (16) when the protrusions are gripped to the grooves (26c) of the protective pipe.

4. Termination box or wall bend as claimed in any of claims 1 to 3, **characterized in that** the flexible conduit sealing (19) is arranged to receive and seal conduits (25) of various sizes.

5. Termination box or wall bend as claimed in any of the preceding claims, **characterized in that** the flexible sealing part (18) further comprises a spring element (21) extending between the protrusions of the locking mechanism (17, 27) and the inner side of the fastening sleeve (16) for supporting flexibly the locking mechanism (17, 27).

6. Termination box or wall bend as claimed in any of the preceding claims, **characterized in that** the locking mechanism (17) is formed as an integral part of the fastening sleeve (16).

7. Termination box or wall bend as claimed in any of the preceding claims, **characterized in that** the locking mechanism (27) is formed as a separate piece mounted in the fastening sleeve (16).

8. Termination box or wall bend as claimed in claim 2, or in claim 2 and any of the preceding claims 3-7, wherein the lid (13) locking the tap elbow (12) or tap fitting in place in the body (11) of the termination box (10) or the wall bend is provided with a bayonet connection arrangement comprising thread-like bayonet elements arranged on the outer circumferential face of the lid (13), each of which elements are provided with a notch (15), and in an inner circumferential face of an opening in the body (11) of the termination box (10) or wall bend counter elements for the bayonet elements are arranged to guide the lid (13) in its place when the lid (13) is turned either clockwise or counter clockwise.

9. Termination box or wall bend as claimed in claim 8, **characterized in that** between the body (11) of the termination box (10) or wall bend and the back side of the lid (13) a sealing element (14) made of compressible material is arranged to create a force pushing the lid (13) outwards and keeping the counter elements of the body in the notches (15) of the bayonet elements.

## Patentansprüche

1. Unterputz-Abschlusskasten oder-bogen zur Verbindung einer Rohrleitung (25) mit einer Hahnanordnung, wobei der Unterputz-Abschlusskasten (10) oder-bogen ein Gehäuse (11), in dessen Innerem ein Rohrkrümmer (12) oder Hahnanschlussstück montierbar ist, und eine Befestigungsmanschette (16) umfasst, wobei die Rohrleitung (25) ein inneres Versorgungsrohr (26a) und ein äußeres Schutzrohr (26b) aufweist, wobei das Schutzrohr (26b) an seiner Außenfläche mit umlaufenden Nuten (26c) versehen ist, wobei die Rohrleitung (25), wenn der Unterputz-Abschlusskasten oder-bogen verwendet wird, mit dem Rohrkrümmer (12) oder dem Hahnanschlussstück mit einer Befestigungsmanschette (16) verbunden ist, und die Hahnanordnung, wenn der Unterputz-Abschlusskasten oder-bogen verwendet wird, mit dem Rohrkrümmer (12) oder Hahnanschlussstück durch eine Buchse (22) oder einen entsprechenden Tunnel, verbunden ist, wobei die Befestigungshülse (16) mit einem Leitungsverriegelungsmechanismus (17, 27) versehen ist, der mit Vorsprüngen ausgebildet ist, die sich in Richtung der Innenseite der Befestigungsmanschette (16) erstrecken, um an den Nuten (26c) des Schutzrohres (26b) anzugreifen, **dadurch gekennzeichnet, dass** die Befestigungsmanschette (16) ein flexibles Dichtungsstück (18) umfasst, das im Inneren der Befestigungsmanschette (16) angeordnet ist, wobei das Dichtungsstück (18) eine flexible Leitungsdichtung (19), die, wenn der Unterputz-Abschlusskasten oder-bogen verwendet wird, gegen an der äußeren Oberfläche des Schutzrohrs (26b) ruht, um dieselbe abzudichten, sowie einen Dichtungsbereich (20), um die Befestigungsmanschette (16) mit dem Gehäuse (11) des Unterputz-Anschlusskastens (10) oder-bogens abzudichten.

2. Unterputz-Abschlusskasten oder-bogen nach Anspruch 1, **dadurch gekennzeichnet, dass** der Unterputz-Abschlusskasten oder-bogen ein Endteil (13) umfasst, wobei, wenn der Unterputz-Abschlusskasten oder-bogen verwendet wird, der Rohrkrümmer (12) oder das Hahnanschlussstück durch das Endteil (13) arretiert ist.

3. Unterputz-Abschlusskasten oder-bogen nach Anspruch 1 oder 2, **dadurch gekennzeichnet, dass** die Vorsprünge des Verriegelungsmechanismus (17, 27) in radialer Richtung der Befestigungsmanschette (16) flexibel sind, um die Aufnahme von Rohrleitungen (25) verschiedener Größen in der Befestigungsmanschette (16) zu ermöglichen, und in der axialen Richtung der Befestigungsmanschette (16) steif sind, um zu verhindern, dass die Leitung (25) aus der Befestigungsmanschette (16) herausgezogen wird, wenn die Vorsprünge an den Nuten (26c) des Schutzrohrs angreifen.

4. Unterputz-Abschlusskasten oder-bogen nach einem der Ansprüche 1 bis 3, **dadurch gekennzeichnet, dass** die flexible Leitungsdichtung (19) so angeordnet ist, Rohrleitungen (25) verschiedener Größen aufzunehmen und abzudichten.

5. Unterputz-Abschlusskasten oder-bogen nach einem der vorhergehenden Ansprüche, **dadurch gekennzeichnet, dass** das flexible Dichtungsstück (18) ferner ein Federelement (21) umfasst, das sich zwischen den Vorsprüngen des Verriegelungsmechanismus (17, 27) und der Innenseite der Befestigungsmanschette (16) erstreckt, um die Flexibilität des Verriegelungsmechanismus (17, 27) zu unterstützen.

6. Unterputz-Abschlusskasten oder-bogen nach einem der vorhergehenden Ansprüche, **dadurch gekennzeichnet, dass** der Verriegelungsmechanismus (17) als integraler Bestandteil der Befestigungsmanschette (16) ausgebildet ist.

7. Unterputz-Abschlusskasten oder-bogen nach einem der vorhergehenden Ansprüche, **dadurch gekennzeichnet, dass** der Verriegelungsmechanismus (27) als separates Teil, das in der Befestigungsmanschette (16) montiert ist, ausgebildet ist.

8. Unterputz-Abschlusskasten oder-bogen nach Anspruch 2 oder nach Anspruch 2 und einem der vorhergehenden Ansprüche 3-7, wobei das Endteil (13), der den Rohrkrümmer (12) oder das Hahnanschlussstück im Gehäuse (11) des Unterputz-Abschlusskastens (10) oder-bogens arretiert, mit einer Bajonett-Verbindungsanordnung ausgestattet ist, die an der äußeren Umfangsfläche des Endteils (13) gewindeartige Bajonettelemente umfasst, wobei jedes dieser Elemente mit einer Kerbe (15) versehen ist, und wobei in einer inneren Umfangsfläche einer Öffnung im Gehäuse (11) des Unterputz-Abschlusskastens (10) oder-bogens Gegenelemente dieser Bajonettelemente angeordnet sind, um das Endteil (13) an seine Stelle zu führen, wenn das Endteil (13) entweder im Uhrzeigersinn oder gegen den Uhrzeigersinn gedreht wird.

9. Unterputz-Abschlusskasten oder-bogen nach Anspruch 8, **dadurch gekennzeichnet, dass** zwischen dem Gehäuse (11) des Unterputz-Abschlusskastens (10) oder-bogens und der Rückseite des Endteils (13) ein Dichtungselement (14), das aus kompressiblem Material hergestellt ist, angeordnet ist, um eine Kraft zu erzeugen, die das Endteil (13) nach außen drückt und die die Gegenelemente des Gehäuses in den Kerben (15) der Bajonettelemente hält.

## Revendications

1. Boîtier d'encastrement ou raccord d'angle mural pour raccorder une conduite (25) à un ensemble de robinet, ledit boîtier d'encastrement (10) ou raccord d'angle mural comprenant un corps (11) à l'intérieur duquel un coude de robinet (12) ou un raccord de robinet est montable et un manchon de fixation (16), laquelle conduite (25) comprend un tuyau d'amenée intérieur (26a) et un tuyau protecteur extérieur (26b), le tuyau protecteur (26b) étant pourvu de rainures circonférentielles (26c) sur sa face extérieure, la conduite (25) étant raccordée, lorsque le boîtier d'encastrement ou raccord d'angle mural est en utilisation, au coude de robinet (12) ou raccord de robinet avec le manchon de fixation (16), et l'ensemble de robinet étant raccordé, lorsque le boîtier d'encastrement ou raccord d'angle mural est en utilisation, au coude de robinet (12) ou raccord de robinet par l'intermédiaire d'une douille (22) ou tunnel correspondant, le manchon de fixation (16) étant pourvu d'un mécanisme de verrouillage de conduite (17, 27) formé de protubérances s'étendant vers l'intérieur du manchon de fixation (16) pour serrer les rainures (26c) du tuyau protecteur (26b), **caractérisé en ce que** le manchon de fixation (16) comprend une partie d'étanchement flexible (18) agencée à l'intérieur du manchon de fixation (16), laquelle partie d'étanchement (18) comprend un étanchement de conduite flexible (19) reposant, lorsque le boîtier d'encastrement ou raccord d'angle mural est en utilisation, contre la surface extérieure du tuyau protecteur (26b) pour assurer l'étanchement de celle-ci et une section d'étanchement (20) pour assurer l'étanchement du manchon de fixation (16) par rapport au corps (11) du boîtier de raccordement (10) ou raccord d'angle mural.

2. Boîtier d'encastrement ou raccord d'angle mural selon la revendication 1, **caractérisé en ce que** le boîtier d'encastrement ou raccord d'angle mural comprend un couvercle (13) dans lequel, lorsque le boîtier d'encastrement ou raccord d'angle mural est en utilisation, ledit coude de robinet (12) ou raccord de robinet est verrouillé en place par le couvercle (13).

3. Boîtier d'encastrement ou raccord d'angle mural selon la revendication 1 ou 2, **caractérisé en ce que** les protubérances du mécanisme de verrouillage (17, 27) sont flexibles dans la direction radiale du manchon de fixation (16) pour permettre de recevoir des conduites (25) de diverses tailles dans le manchon de fixation (16) et raides dans la direction axiale du manchon de fixation (16) pour empêcher la conduite (25) de sortir du manchon de fixation (16) lorsque les protubérances sont serrées sur les rainures (26c) du tuyau protecteur.

4. Boîtier d'encastrement ou raccord d'angle mural selon l'une quelconque des revendications 1 à 3, **caractérisé en ce que** l'étanchement de conduite flexible (19) est agencé pour recevoir et assurer l'étanchement de conduites (26) de diverses tailles.

5. Boîtier d'encastrement ou raccord d'angle mural selon l'une quelconque des revendications précédentes, **caractérisé en ce que** la partie d'étanchement flexible (18) comprend en outre un élément de ressort (21) s'étendant entre les protubérances du mécanisme de verrouillage (17, 27) et le côté intérieur du manchon de fixation (16) pour supporter de façon flexible le mécanisme de verrouillage (17, 27).

6. Boîtier d'encastrement ou raccord d'angle mural selon l'une quelconque des revendications précédentes, **caractérisé en ce que** le mécanisme de verrouillage (17) est formé en tant que partie intégrante du manchon de fixation (16).

7. Boîtier d'encastrement ou raccord d'angle mural selon l'une quelconque des revendications précédentes, **caractérisé en ce que** le mécanisme de verrouillage (27) est formé en tant que pièce séparée montée dans le manchon de fixation (16).

8. Boîtier d'encastrement ou raccord d'angle mural selon la revendication 2 ou selon la revendication 2 et l'une quelconque des revendications 3 à 7, dans lequel le couvercle (13) verrouillant le coude de robinet (12) ou raccord de robinet en place dans le corps (11) du boîtier d'encastrement (10) ou raccord d'angle mural est pourvu d'un agencement de raccordement à baïonnette comprenant des éléments de baïonnette de type filet agencés sur la face circonférentielle extérieure du couvercle (13), chacun desquels éléments est pourvu d'une encoche (15), et dans une face circonférentielle intérieure d'une ouverture du corps (11) du boîtier d'encastrement (10) ou raccord d'angle mural des contre-éléments des éléments de baïonnette sont agencés pour guider le couvercle (13) à sa place lorsque le couvercle (13) est tourné dans le sens horaire ou antihoraire.

9. Boîtier d'encastrement ou raccord d'angle mural selon la revendication 8, **caractérisé en ce qu'**entre le corps (11) du boîtier d'encastrement (10) ou raccord d'angle mural et le côté arrière du couvercle (13) un élément d'étanchement (14) fait de matériau compressible est agencé pour créer une force poussant le couvercle (13) vers l'extérieur et gardant les contre-éléments du corps dans les encoches (15) des éléments de baïonnette.
